# EUROPÄISCHE PATENTANMELDUNG

(11) **EP 2 006 171 A2**
(43) Veröffentlichungstag der Anmeldung: **24.12.2008**
(21) Anmeldenummer: 08103638.6
(22) Anmeldetag: 21.04.2008
(51) Int. Cl.: B60S 1/04, B60S 1/58

(54) **Scheibenwischerantriebsanordnung**

(30) Priorität: 20.06.2007 DE 102007028383
(71) Anmelder: Robert Bosch GmbH, 70442 Stuttgart (DE)
(72) Erfinder: Lipps, Verena, 77833 Ottersweier (DE)

(57) **Zusammenfassung**

Die Erfindung betrifft eine Scheibenwischerantriebsanordnung für ein Kraftfahrzeug, insbesondere Heckscheibenwischerantriebsanordnung, umfassend ein Getriebegehäuse (1) mit mindestens einem Getriebegehäuseteil (2) aus Kunststoff und mit dem Getriebegehäuseteil (2) zugeordneten Befestigungsmitteln zum Festlegen des Getriebegehäuses (1) an einer Fahrzeugkarosserie (3) oder an einem Fahrzeugfenster. Erfindungsgemäß ist vorgesehen, dass die Befestigungsmittel einen einstückig mit dem Getriebegehäuseteil (2) ausgebildeten Zapfen (4) sowie ein elastisches, an der Fahrzeugkarosserie (3) oder einem Fahrzeugfenster festlegbares, den Zapfen (4) zumindest abschnittsweise umschließendes Stopfenelement (8) aufweisen.

## Beschreibung

### Stand der Technik

Die Erfindung betrifft eine Scheibenwischerantriebsanordnung für ein Kraftfahrzeug, insbesondere eine Heckscheibenwischerantriebsanordnung, gemäß dem Oberbegriff des Anspruchs 1.

Bisher ist es üblich, den Antrieb für einen Heckscheibenwischer eines Kraftfahrzeuges über einen Getriebedeckel eines Getriebegehäuses des Antriebes an der Innenseite der Fahrzeugkarosserie oder der Heckscheibe anzubringen. Zur Minimierung der Geräuschemission werden zur schwingungsmäßigen Entkopplung des Getriebegehäuses von der Karosserie bzw. der Heckscheibe separate Dämpfungselemente aus Gummi an den Getriebedeckel angebracht. Um eine ausreichende Stabilität der Verbindung zwischen dem Scheibenwischerantrieb und der Fahrzeugkarosserie bzw. dem Fahrzeugfenster zu sorgen ist in die buchsenartigen Dämpfungselemente eine Metallhülse eingepresst, durch die eine Schraube oder ein Niet zur Fixierung der Scheibenwischerantriebsanordnung an der Fahrzeugkarosserie oder dem Fahrzeugfenster hindurch geführt ist. Nachteilig bei der bekannten Scheibenwischerantriebsanordnung ist die große Anzahl an benötigten Elementen zur Fixierung der Scheibenwischerantriebsanordnung an einem Kraftfahrzeug. Zudem ist die Montage der bekannten Scheibenwischerantriebsanordnung an dem Kraftfahrzeug aufwändig und zeitintensiv.

### Offenbarung der Erfindung

### Technische Aufgabe

Der Erfindung liegt daher die Aufgabe zugrunde, eine verbesserte Scheibenwischerantriebsanordnung vorzuschlagen, die derart ausgebildet ist, dass eine nur geringe Anzahl von Elementen zur Fixierung der Scheibenwischerantriebsanordnung an einer Fahrzeugkarosserie oder einem Fahrzeugfenster vorgesehen werden müssen. Vorzugsweise soll die Scheibenwischerantriebsanordnung derart ausgebildet sein, dass ihre Montage an einem Kraftfahrzeug vereinfacht ist.

### Technische Lösung

Diese Aufgabe wird mit den Merkmalen des Anspruchs 1 gelöst. Vorteilhafte Weiterbildungen der Erfindung sind in den Unteransprüchen angegeben. In den Rahmen der Erfindung fallen auch sämtlich Kombinationen aus zumindest zwei von in der Beschreibung, den Ansprüchen und/oder den Figuren angegebenen Merkmalen.

Der Erfindung liegt der Gedanke zugrunde, ein Getriebegehäuseteil des Getriebegehäuses der Scheibenwischerantriebsanordnung mit einem Zapfen zu versehen, der vorzugsweise aus Kunststoff ausgebildet ist. Bevorzugt wird der Zapfen unmittelbar bei der Herstellung des Getriebegehäuseteils im Spritzgussverfahren angeformt. Neben dem Zapfen ist ein Stopfenelement aus einem elastischen Material, vorzugsweise aus Gummi, Bestandteil der Befestigungsmittel der Scheibenwischerantriebsanordnung, welches mit dem, insbesondere starren, Zapfen derart zusammenwirkt, dass der Zapfen von dem elastischen Stopfenelement umschlossen ist. Das Stopfenelement wiederum ist derart ausgebildet, dass es an der Fahrzeugkarosserie oder einem Fahrzeugfenster, insbesondere einer Heckscheibe des Fahrzeugs festlegbar ist, insbesondere durch Bilden eines Formschlusses mit einem Fahrzeugkarosserieabschnitt bzw. einem Fahrzeugfensterabschnitt. Dem insbesondere starren Zapfen kommt dabei die Funktion zu, die nötige Stabilität der Verbindung zwischen den Getriebegehäuse und damit der Scheibenwischerantriebsanordnung und der Fahrzeugkarosserie oder dem Fahrzeugfenster sicherzustellen. Das elastische Stopfenelement hat die Funktion, insbesondere durch seine Ausformung, eine sichere Verbindung zu dem Zapfen zu verwirklichen und darüber hinaus, aufgrund seiner Ausbildung aus einem elastischen Material für eine schwingungsmäßige Entkopplung des Antriebs und der Fahrzeugkarosserie bzw. dem Fahrzeugfenster zu sorgen und damit die Geräuschsemission durch Verhindern von Klappergeräuschen, etc. zu minimieren. Ferner dient das Stopfenelement zum unmittelbaren Festlegen der Scheibenwischerantriebsanordnung an der Fahrzeugkarosserie oder dem Fahrzeugfenster. Aufgrund der erfindungsgemäßen Ausgestaltung der Scheibenwischeranordnung werden keine weiteren Bauteile zum Festlegen der Scheibenwischerantriebsanordnung benötigt, wodurch die Anzahl der zur Anwendung kommenden Befestigungsmittel im Vergleich zum Stand der Technik wesentlich minimiert ist. Zudem ist die Montage bzw. das Festlegen der erfindungsgemäßen Scheibenwischerantriebsanordnung an der Fahrzeugkarosserie oder dem Fahrzeugfenster wesentlich vereinfacht. Es liegt im Rahmen der Erfindung mehrere Zapfen mit jeweils einem zugeordneten, elastischen Stopfenelementen vorzusehen.

In Weiterbildung der Erfindung ist mit Vorteil vorgesehen, dass das elastische Stopfenelement derart ausgebildet ist, dass es den Zapfen zumindest abschnittsweise, vorzugsweise ein freies Ende des Zapfens formschlüssig in sich aufnimmt und damit eine sichere Verbindung zwischen dem Zapfen und dem Stopfenelement und damit zwischen dem Antrieb und dem Fahrzeug, an dem das Stopfenelement, insbesondere durch eine formschlüssige Verbindung festlegbar ist, sichergestellt ist.

Gemäß einer ersten, bevorzugten Ausführungsform ist das Stopfenelement einstückig mit dem Zapfen ausgebildet, wobei das Stopfenelement den Zapfen in sich aufnimmt, also zumindest abschnittsweise umschließt. Diese Ausführungsform ermöglicht eine sehr einfache Montage der Scheibenwischerantriebsanordnung an dem Fahrzeug, da ein Montageschritt, nämlich das Überstülpen des Stopfenelementes über den Zapfen entfällt. Bei dieser Ausführungsform sind sämtliche Befestigungsmittel zum Fixieren der Scheibenwischeranordnung an dem Kraftfahrzeug bereits Teil der Scheibenwischerantriebsanordnung, wodurch die Teilevielfalt auf ein Minimum reduziert wird.

Eine Möglichkeit zur einstückigen Ausbildung des Stopfenelementes mit dem Zapfen besteht darin, dass das Getriebegehäuseteil mit dem Zapfen und dem Stopfenelement in einem Mehrkomponentenspritzgussverfahren hergestellt ist. Dabei wird zunächst das Getriebegehäuseteil mit dem Zapfen in einem ersten Spritzgussschritt hergestellt, woraufhin der Zapfen zumindest abschnittsweise mit einem elastischen Material zur Ausbildung des Stopfenelementes umspritzt wird, so dass das Stopfenelement den Zapfen in sich aufnimmt, diesen also umschließt. Diese Ausführungsform ist auch aufgrund der innigen Verbindung zwischen Zapfen und Stopfenelement zu bevorzugen.

Insbesondere wenn auf ein vergleichsweise kostenintensives und technisch aufwändiges Mehrkomponentenspritzgussverfahren verzichtet werden soll, kann eine zweite, alternative Ausführungsform der Erfindung realisiert werden, nach der das elastische Stopfenelement als von dem Zapfen separates Bauteil hergestellt wird, wobei das Stopfenelement mit einer Ausnehmung zur Aufnahme, insbesondere zur zumindest abschnittsweise formschlüssigen Aufnahme des Zapfens ausgebildet wird. Zur Montage der Scheibenwischerantriebsanordnung an einem Kraftfahrzeug gibt es bei einer derartigen Ausführungsform zwei Möglichkeiten. Die erste Möglichkeit besteht darin, zunächst das Stopfenelement an der Fahrzeugkarosserie oder dem Fahrzeugfenster, insbesondere durch Herstellen einer formschlüssigen Verbindung mit der Fahrzeugkarosserie oder mit dem Fahrzeugfenster, insbesondere innerhalb eines Aufnahmelochs in der Fahrzeugkarosserie oder einem Fahrzeugfenster, zu befestigen und daraufhin den Zapfen in das Stopfenelement einzuführen, so dass dieser in diesem gehalten wird. Gemäß einer zweiten, bevorzugten Möglichkeit zur Befestigung des Antriebs an der Fahrzeugkarosserie oder an dem Fahrzeugfenster, wird zunächst das Stopfenelement an dem Zapfen, insbesondere durch Einschieben des Zapfens in das Stopfenelement festgelegt, woraufhin die Einheit aus Zapfen und Stopfenelement an der Fahrzeugkarosserie oder einem Fahrzeugfenster befestigt wird.

In Weiterbildung der Erfindung ist mit Vorteil vorgesehen, dass die Verbindung zwischen dem Zapfen und dem Stopfenelement, insbesondere bei einer separaten, eigenständigen Ausbildung des Stopfenelementes auf Zug belastbar ist, der Zapfen also unverlierbar in dem Stopfenelement gehalten ist.

Eine Möglichkeit zur Realisierung einer auf Zug belastbaren Verbindung zwischen dem Zapfen und dem Stopfenelement kann dadurch erreicht werden, dass der Zapfen einen Hintergreifungsabschnitt aufweist, insbesondere einen in radialer Richtung hervorstehenden Abschnitt, der einen radial nach innen ragenden Vorsprung des Stopfenelementes, vorzugsweise eine umlaufende Ringschulter des Stopfenelementes hintergreift.

Zum Herstellen einer formschlüssigen Verbindung zwischen dem Stopfenelement und der Fahrzeugkarosserie oder dem Fahrzeugfenster ist eine Ausführungsform der Scheibenwischerantriebsanordnung von Vorteil, bei der das Stopfenelement, eine insbesondere umlaufende, äußere Aufnahmenut aufweist. In diese Aufnahmenut kann eine Karosseriekante oder Fensterkante, insbesondere eine umlaufende Kante eines Aufnahmelochs in der Fahrzeugkarosserie oder dem Fahrzeugfenster eingreifen, wodurch die Verbindung zwischen dem Stopfenelement und damit zwischen der Scheibenwischerantriebsanordnung und der Fahrzeugkarosserie bzw. dem Fahrzeug ohne weitere Befestigungselemente sichergestellt werden kann und auf Zug belastbar ist.

Von besonderem Vorteil ist eine Ausführungsform, bei der die Aufnahmenut zum Herstellen einer formschlüssigen Verbindung mit der Fahrzeugkarosserie oder dem Fahrzeugfenster in einem Bereich des Stopfenelementes angeordnet ist, der sich zwischen einem axialen Ende des Stopfenelementes, insbesondere einem offenen Ende des Stopfenelementes und einem inneren Aufnahmebereich für den Hintergreifungsabschnitt des Zapfens angeordnet ist. Die in der Aufnahmenut aufgenommene Fahrzeugkarosserie bzw. das aufgenommene Fahrzeugfenster verhindert auf diese Weise eine Aufweitung des Stopfenelementes in einem Bereich zwischen dem freien Ende des Stopfenelementes und dem Bereich des Stopfenelementes, der von dem Zapfen zum Herstellen einer formschlüssigen Verbindung hintergriffen wird. Die Aufnahmenut schnürt also den Zapfen in das Stopfenelement ein und verbindet somit zuverlässig ein Herausrutschen.

Als besonders Vorteilhaft hat sich eine Ausführungsform herausgestellt, bei der das Getriebegehäuseteil, das mit mindestens einem Zapfen versehen ist, ein Getriebegehäusedeckel ist.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: eine Seitenansicht eines als Getriebegehäusedeckel ausgebildeten Getriebegehäuseteils mit einem einstückigen Zapfen,
- Fig. 2:: ein von dem Zapfen separates Stopfenelement aus einem elastischen Material zur Aufnahme des Zapfens gemäß Fig. 1 und
- Fig. 3:: eine an einer Fahrzeugkarosserie montierte Scheibenwischerantriebsanordnung.

In den Figuren sind gleiche Bauteile und Bauteile mit der gleichen Funktion mit den gleichen Bezugszeichen gekennzeichnet.

### Ausführungsform der Erfindung

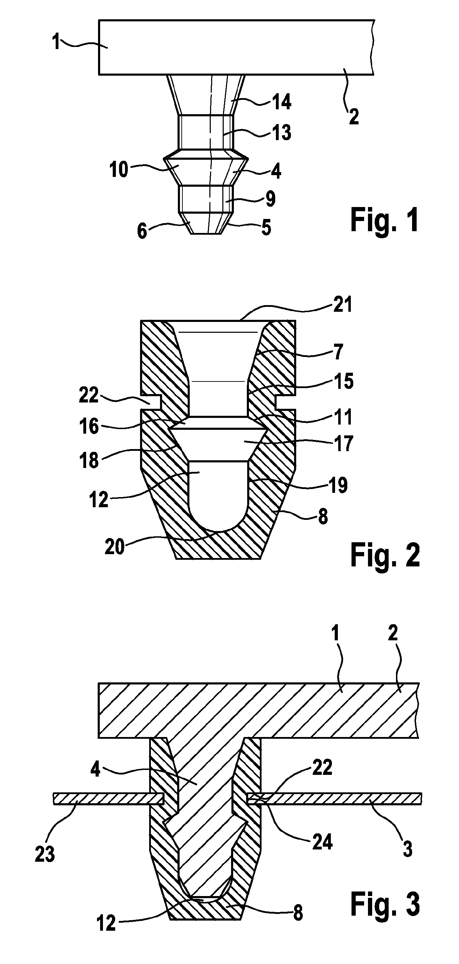

In Fig. 1 ist ein Ausschnitt einer Scheibenwischeranordnung für ein Kraftfahrzeug dargestellt. Die Scheibenwischeranordnung umfasst einen nicht dargestellten Elektromotor, dessen ebenfalls nicht dargestelltes Polgehäuse an einem nur ausschnittsweise dargestellten Getriebegehäuse 1 festgelegt ist. Der Elektromotor dient zum pendelnden Antreiben mindestens eines Wischers. Das Getriebegehäuse 1 umfasst ein als in diesem Ausführungsbeispiel als Getriebegehäusedeckel ausgebildetes Getriebegehäuseteil 2, über das die gesamte Scheibenwischerantriebsanordnung an einer in Fig. 3 angedeuteten Fahrzeugkarosserie 3 festlegbar ist.

Das Getriebegehäuseteil 2 ist aus Kunststoff ausgebildet und weist einen einstückig mit dem Getriebegehäuseteil 2 ausgebildeten Zapfen 4 auf, der vorzugsweise aus Kunststoff ausgebildet ist. Der Zapfen 4 wurde in einem gemeinsamen Spritzgussprozess bei der Fertigung des Getriebegehäuseteils 2 angeformt.

Der Zapfen 4 weist im Bereich seines freien Endes 5 einen angefasten Abschnitt 6 zur verbesserten Findung eines korrespondierenden Einlaufschrägenabschnitts 7 in einem Stopfenelement 8 aus einem gummielastischen Material auf.

An den angefasten Abschnitt 6 schließt in Richtung des Getriebegehäuseteils 2 ein zylindrischer Abschnitt 9 an. An den zylindrischen Abschnitt 9 wiederum schließt in Richtung des Getriebegehäuseteils 2 ein Hintergreifungsabschnitt 10 an, mit dem im montierten Zustand ein nach radial innen ragender Vorsprung 11 innerhalb des Stopfenelementes 8 hintergriffen wird. Der Hintergreifungsabschnitt 10 ist zum erleichterten Einführen in die Ausnehmung 12 des Stopfenelementes 8 angefast. Bei dem Hintergreifungsabschnitt 10 handelt es sich um einen in radialer Richtung nach außen hervorstehenden, umlaufenden Abschnitt bzw. Umfangsbund. An den Hintergreifungsabschnitt 10 schließt in Richtung des Getriebegehäuseteils 2 ein weiterer zylindrischer Abschnitt 13 an, der in einen sich konisch erweiternden Fußabschnitt 14 übergeht.

Zur Montage der Scheibenwischerantriebsanordnung an der in Fig. 3 angedeuteten Fahrzeugkarosserie 3 wird zunächst das in Fig. 2 gezeigte Stopfenelement 8 aus elastischem Material auf den Zapfen 4 aufgeschoben. Hierzu ist das Stopfenelement 8 mit der Ausnehmung 12 versehen, die bereichsweise formkongruent mit dem Zapfen 4 ausgebildet ist. Der bereits erwähnte Einlaufschrägenabschnitt 7 des Stopfenelementes 8 geht über in einen hohlzylindrischen Abschnitt 15, der zumindest näherungsweise formkongruent zu dem zylindrischen Abschnitt 13 des Zapfens 13 ausgebildet ist. Der hohlzylindrische Abschnitt 15 bildet zusammen mit einem sich radial verbreiternden Abschnitt 16 eines Aufnahmebereiches 17 für den Hintergreifungsabschnitt 10 des Zapfens einen radial nach innen ragenden Vorsprung, der von dem Hintergreifungsabschnitt 10 im montierten Zustand hintergriffen wird.

Benachbart zu dem sich radial in konischer Weise verbreiternden Abschnitt 16 der Ausnehmung 12 schließt ein sich konisch verjüngender Abschnitt 18 an, wobei der von den Abschnitten 16, 18 gebildete Aufnahmebereich 17 formkongruent zu dem Hintergreifungsabschnitt 10 ausgebildet ist. An den Aufnahmebereich 17 schließt ein hohlzylindrischer Abschnitt 19 an, der formkongruent zu dem zylindrischen Abschnitt 9 des Zapfens 10 ausgeformt ist. Aus fertigungstechnischen Gründen ist das innere Ende 20, d.h. der Boden der Ausnehmung 12 nicht sich konisch verjüngend, sondern abgerundet ausgebildet.

Ferner ist in Fig. 2 zu erkennen, dass das Stopfenelement 8 in einem Bereich axial zwischen seinem offenen freien Ende 21 und dem Aufnahmebereich 17 eine umlaufende Aufnahmenut 22 vorgesehen ist. Die Nutbreite der Aufnahmenut entspricht zumindest näherungsweise der Dicke des Fahrzeugkarosserieblechs 23 gemäß Fig. 3.

In Fig. 3 ist eine an der Fahrzeugkarosserie 3 montierte Scheibenwischeranordnung gezeigt. Zu erkennen ist, dass der Zapfen 4 über weite Bereiche formkongruent in dem Zapfen 8 aufgenommen ist. Zu erkennen ist auch, dass der maximale Durchmesser des Zapfens - hier in seinen Hintergreifensabschnitt 10 - zumindest etwas kleiner bemessen ist, als der Durchmesser einer Montageöffnung 24 in der Fahrzeugkarosserie 3. Aus Fig. 3 ist zu erkennen, dass das in der Aufnahmenut 22 aufgenommene Karosserieblech 23 eine einschnürende Wirkung auf das Stopfenelement 8 bzw. den Zapfen 4 ausübt, dergestalt, dass ein Herausziehen des Zapfens 4 aus der Ausnehmung 12 nur äußerst schwer mit enormen Kraftaufwand möglich ist und somit ein Lösen während des laufenden Betriebs verhindert wird.

Neben der gezeigten zweiteiligen Ausbildung von Zapfen 4 und Stopfenelement 8 ist eine einstückige Ausbildung durch Anspritzen des Stopfenelementes 8 an dem Zapfen 4 möglich, wobei das Material des Stopfenelementes 8 elastischer sein muss als das des Zapfens 4. Bei einer derartigen Ausführungsform liegt der Zapfen bevorzugt auch in einem stirnseitigen Bereich an dem Stopfenelement 8 an bzw. ist dort mit diesem innig verbunden.

## Patentansprüche

1. Scheibenwischerantriebsanordnung für ein Kraftfahrzeug, insbesondere Heckscheibenwischerantriebsanordnung, umfassend ein Getriebegehäuse (1) mit mindestens einem Getriebegehäuseteil (2), insbesondere aus Kunststoff, und mit dem Getriebegehäuseteil (2) zugeordneten Befestigungsmitteln zum Festlegen des Getriebegehäuses (1) an einer Fahrzeugkarosserie (3) oder an einem Fahrzeugfenster,
**dadurch gekennzeichnet,**
**dass** die Befestigungsmittel einen insbesondere einstückig mit dem Getriebegehäuseteil (2) ausgebildeten Zapfen (4), der vorzugsweise aus Kunststoff ausgebildet ist, aufweist, sowie ein elastisches, an der Fahrzeugkarosserie (3) oder einem Fahrzeugfenster festlegbares, den Zapfen (4) zumindest abschnittsweise umschließendes Stopfenelement (8) aufweist.

2. Scheibenwischerantriebsanordnung nach Anspruch 1,
**dadurch gekennzeichnet,**
**dass** das Stopfenelement (8) zur formschlüssigen Aufnahme des Zapfens (4) ausgebildet ist.

3. Scheibenwischerantriebsanordnung nach einem der Ansprüche 1 oder 2,
**dadurch gekennzeichnet,**
**dass** das Stopfenelement (8) einstückig mit dem Zapfen (4), den Zapfen (4) zumindest abschnittweise umschließend, ausgebildet ist.

4. Scheibenwischerantriebsanordnung nach Anspruch 3,
**dadurch gekennzeichnet,**
**dass** das Getriebegehäuseteil (2) mit dem Zapfen (4) und dem Stopfenelement (8) in einem Mehrkomponentenspritzgussverfahren hergestellt ist.

5. Scheibenwischerantriebsanordnung nach einem der Ansprüche 1 oder 2,
**dadurch gekennzeichnet,**
**dass** das Stopfenelement (8) als von dem Zapfen (4) separates Bauteil ausgebildet ist.

6. Scheibenwischerantriebsanordnung nach einem der vorhergehenden Ansprüche,
**dadurch gekennzeichnet,**
**dass** der Zapfen (4) unverlierbar in dem Stopfenelement (8) gehalten ist.

7. Scheibenwischerantriebsanordnung nach einem der vorhergehenden Ansprüche,
**dadurch gekennzeichnet,**
**dass** der Zapfen (4) einen Abschnitt (16, 18), insbesondere eine innere Ringschulter, des Stopfenelementes (8) mit einem Hintergreifungsabschnitt (10) hintergreifend ausgebildet ist.

8. Scheibenwischerantriebsanordnung nach einem der vorhergehenden Ansprüche,
**dadurch gekennzeichnet,**
**dass** das Stopfenelement (8) eine äußere, insbesondere umlaufende, Aufnahmenut (22) zur Aufnahme einer, insbesondere umlaufenden, Karosseriekante oder Fensterkante aufweist.

9. Scheibenwischerantriebsanordnung nach Anspruch 8, **dadurch gekennzeichnet,**
**dass** die Aufnahmenut (22) in einem Bereich axial zwischen einem axialen Ende (20) des Stopfenelementes (8) und einem inneren Aufnahmebereich (17) für einen Hintergreifungsabschnitt (10) des Zapfens (4) angeordnet ist.

10. Scheibenwischerantriebsanordnung nach einem der vorhergehenden Ansprüche,
**dadurch gekennzeichnet,**
**dass** das Getriebegehäuseteil (2) ein Getriebegehäusedeckel ist.
